# EUROPÄISCHE PATENTSCHRIFT

(11) **EP 2 442 965 B1**
(45) Veröffentlichungstag und Bekanntmachung des Hinweises auf die Patenterteilung: **29.07.2015**
(21) Anmeldenummer: 10726477.2
(22) Anmeldetag: 15.06.2010
(51) Int. Cl.: B29C 70/02, B32B 27/04, C08G 77/04

(54) **VERFAHREN ZUR HERSTELLUNG EINES TEXTILEN HALBZEUGS MIT VERBESSERTER ZÄHIGKEIT UND TEXTILES HALBZEUG**
PROCESS FOR MAKING SEMIFINISHED TEXTILE PRODUCTS HAVING ENHANCED STRENGTH AND SEMIFINISHED TEXTILE PRODUCT
PROCEDE DE FABRICATION DES DEMI-PRODUITS TEXTILES EN TENACITE AVANCE ET DEMI-PRODUITS TEXTILES

(30) Priorität: 16.06.2009 DE 102009025981
(43) Veröffentlichungstag der Anmeldung: 25.04.2012
(73) Patentinhaber: SAERTEX GmbH & Co. KG, 48369 Saerbeck (DE)
(72) Erfinder: ISCHTSCHUK, Lars, 49205 Hasbergen (DE); PALINSKY, Andreas, 47445 Moers (DE)
(74) Vertreter: Werner & ten Brink
(86) Internationale Anmeldenummer: PCT/EP2010/058420
(87) Internationale Veröffentlichungsnummer: WO 2010/146069

(56) Entgegenhaltungen:
- EP-A2- 0 509 373
- WO-A2-2007/109100
- DE-A1-102006 039 572
- JP-A- 9 003 146
- US-A1- 2009 143 513
- US-B1- 6 201 064

## Beschreibung

Die vorliegende Erfindung betrifft ein Verfahren zur Herstellung eines textilen Halbzeugs, beinhaltend einen zähigkeitssteigernden Werkstoff zur Herstellung eines Faserverbundbauteils sowie ein textiles Halbzeug in der Form von einzelnen, ein Gelege bildenden Lagen, Gelegen, Geweben, Gewirken, Gestricken, Matten oder Geflechten oder einer Kombination davon. Die Gelege können insbesondere unidirektional, biaxial oder multiaxial sein.

Für die Herstellung von hochwertigen Bauteilen aus mit einem Harzsystem vorimprägnierten Faserhalbzeug, den sogenannten "Composites", werden bekannterweise aufgrund der Anforderungen der Praxis verstärkt sogenannte zähigkeitssteigernde Werkstoffe - in Fachkreisen "Toughener" genannt - für das Matrixsystem eingesetzt. Diese zähigkeitssteigernden Werkstoffe haben eine dämpfende Wirkung, d. h. dass sie z. B. bei einer Stoßbelastung, auch Impact genannt, das Delaminierverhalten des Faserhalbzeugbauteiles positiv beeinflussen. Ein eventuell auftretender Schaden am Bauteil soll so begrenzt werden oder erst gar nicht entstehen.

Bei der Verarbeitung von vorimprägniertem Faserhalbzeug, sogenannten Prepregs, ist diese Art der "Zähigkeitssteigerung" schon lange bekannt. Dazu werden bei der Herstellung der vorimprägnierten Faserhalbzeugteile in das Harz sogenannte "weiche Anteile" oder "weiche Partikel" eingebracht. Dies sind üblicherweise Thermoplaste oder Elastomere. Sie bleiben bedingt durch ihre Größe vor Ort und dringen nicht in oder durch die Faserbündel. Da vorimprägnierte Faserhalbzeuge, sogenannte Prepregs, jedoch aufgrund der höheren Kosten und schlechteren Drapierfähigkeit nicht überall einzusetzen sind, hat man versucht, auch zähigkeitssteigernde Werkstoffe bei Infusions- oder Injektionsbauteilen einzusetzen.

Zu diesem Zweck ist aus der DE 10 2006 039 572 A1 bekannt, zähigkeitssteigernde Werkstoff einer Größe kleiner als 200 nm in flüssiger Form, insbesondere dispergierte Silikon-Körner einer Korngröße im Nanometerbereich auf die Außenseite von unidirektionalen Gelegen, von einzelnen, ein multidirektionales Gelege bildenden Lagen, von Geweben, Gewirken, Gestricken, Matten oder Geflechten aufzubringen. Diese von zähigkeitssteigernden Werkstoffen vorzunehmen, um ein Eigenschaftsverbesserung der textilen Halbzeuge bzw. den aus ihnen hergestellten Faserverbundbauteilen zu erreichen, insbesondere wenn die zähigkeitssteigernden Werkstoffe mit Korngrößen im Nanometerbereich vorliegen. Es bestand die Ansicht, dass es zur Zähigkeitssteigerung notwendig sei, den zähigkeitssteigernden Werkstoff möglichst homogen über das Textil zu verteilen, um eine Art Wegspülen durch das verglichen mit vorimprägnierten Faserhalbzeugen niedrigviskosen Matrixharz bei der Weiterverarbeitung zu Faserverbundbauteilen zu verhindern.

Die JP H9-003146 A beschreibt die Herstellung eines Copolymerpulvers, welches eine Gummimischung aus Polyorganosiloxan-Latex umfasst. Die Partikel der Gummimischung weisen eine durchschnittliche Größe von 10 nm bis 100 nm auf.

In der WO 2007/109100 A2 wird eine Verbundstruktur offenbart, die Fasern von hoher Zähigkeit umfasst, die mit einem Matrixharz beschichtet sind. Die Verbundstruktur kann außerdem einen stoßabsorbierenden elastomeren Füllstoff mit einer Partikelgröße von weniger als 100 µm umfassen, der direkt in dem Matrixharz verteilt wird.

Der vorliegenden Erfindung liegt die Aufgabe zugrunde, das bekannte Herstellungsverfahren für textile Halbzeuge mit gesteigerter Zähigkeit zu verbessern.

Erfindungsgemäß wird die Aufgabe durch ein Verfahren zur Herstellung eines textilen Halbzeugs gelöst, beinhaltend einen zähigkeitssteigernden Werkstoff zur Herstellung eines Faserverbundbauteils, mit den Schritten:
- Mischen des zähigkeitssteigernden Werkstoffs in Pulverform mit einem Binder in Pulverform, wobei das Pulvergemisch eine Partikelgröße im Bereich von 0,5 µm bis 500 µm aufweist,
- Aufbringen des Pulvergemischs auf die Außenseite von von einzelnen, ein Gelege bildenden Lagen, Gelegen, Geweben, Gewirken, Gestricken, Matten oder Geflechten oder einer Kombination davon.

Die einzelnen, ein Gelege bildenden Lagen, Gelege, Gewebe, Gewirke, Gestricke, Matten oder Geflechte oder Kombinationen davon, werden im Folgenden zusammenfassend Textil genannt. Die ein Gelege bildenden Lagen werden auch Ply genannt und bilden insbesondere unidirektionale oder biaxiale oder multiaxiale Gelege. Entgegen allen bisher üblichen Annahmen hat es sich erstaunlicherweise herausgestellt, dass auch ohne Dispergierung von zähigkeitssteigernden Werkstoffen eine verbesserte Zähigkeit bei textilen Halbzeugen und daraus hergestellten Faserverbundbauteile erhalten wird. Insbesondere kann auf die aufwendige Darreichung des zähigkeitssteigernden Werkstoffs als Körner mit Korngrößen im Nanometerbereich in dispergierter Form verzichtet werden. Dabei kann der zähigkeitssteigernde Werkstoff in Partikel einer Größe im Mikrometer- bis Submillimeterbereich vorliegen, bevorzugt im Bereich von 0,5 µm bis 500 µm, besonders bevorzugt im Bereich von 1 µm bis 350 µm, ganz besonders bevorzugt im Bereich von 5 µm bis 200 µm. Bei den Partikeln kann es sich um einzelne Körner wie auch um Agglomerate von mehreren Körnern handeln.

Durch Einsparung von Zeit und Energie bei der Aufbereitung der zähigkeitssteigernden Werkstoffe bzw. von Kosten bei der Beschaffung der zähigkeitssteigernden Werkstoffe lassen sich textile Halbzeuge mit erhöhter Zähigkeit nun einfacher und wirtschaftlicher herstellen.

Beim Aufbringen in Pulverform handelt es sich um ein trockenes Aufbringen des zähigkeitssteigernden Werkstoffs im Gegensatz zum Aufbringen basierend auf einer Flüssigkeit wie etwa beim Sprühen oder Eintauchen. Dadurch lassen sich zusätzlich signifikant bei der Beschaffung und Aufbereitung des zähigkeitssteigernden Werkstoffs sowie bei der Ausrüstung des Textils durch Aufbringen des zähigkeitssteigernden Werkstoffs in Pulverform Kosten, Zeit und Aufwand sparen und lassen sich textile Halbzeuge mit erhöhter Zähigkeit besonders einfach und wirtschaftlich herstellen.

Das Pulvergemisch weist bevorzugt eine Partikelgröße im Bereich von 1 µm bis 350 µm, besonders bevorzugt von 5 µm bis 200 µm auf. Je nach verwendetem zähigkeitssteigerndem Werkstoff kann der Binder das thermische Fixieren des zähigkeitssteigernden Werkstoffs auf dem Textil unterstützen oder ermöglichen. Er kann auch dazu dienen, weitere funktionelle Zusätze zum Beeinflussen der Eigenschaften des textilen Halbzeuges aufzunehmen. Ebenso kann der Binder selbst zusätzliche Funktionen übernehmen wie beispielsweise die eines Flammschutzmittels. Das Mischen der beiden Pulver geschieht bevorzugt mechanisch, beispielsweise durch Rühren, Schütteln, trockenes Vermahlen o.ä.. Wie bei dem Pulver nur aus zähigkeitssteigerndem Werkstoff kann es sich bei den Partikeln um einzelne Körner wie auch um Agglomerate von mehreren Körnern einer Größe im Mikrometer- bis Submillimeterbereich handeln.

Vorteilhafterweise wird ein thermoplastischer Binder verwendet. Dies wirkt sich positiv auf das thermische Fixieren des zähigkeitssteigernden Werkstoffs auf dem Textil aus.

Vorteilhalfterweise kann der Binder unter Berücksichtigung auf das Materixharz gewählt werden, das bei der Weiterverarbeitung des textilen Halbzeugs zu einem Faserverbundbauteil verwendet wird. Häufig wird bei der Weiterverarbeitung ein Epoxidharz eingesetzt. Bevorzugt wird auch ein Epoxidharz als Binder verwendet. Insbesondere wird ein Epoxidharz mit einem Epoxidäquivalent im Bereich von etwa 700 g/Äquivalent bis etwa 3000 g/Äquivalent, bevorzugt von etwa 800 g/Äquivalent bis etwa 2000 g/Äquivalent verwendet.

In besonders bevorzugten Ausführungsformen werden zähigkeitssteigernder Werkstoff und Binder in einem Mischungsverhältnis in Gewichtsprozent von Binder zu zähigkeitssteigerndem Werkstoff im Bereich von 50:50 bis 30:70 gemischt. Damit können hinreichende Zähigkeiten bei gleichzeitig hinreichender Bindung zwischen zähigkeitssteigerndem Werkstoff und Textil einerseits und textilem Halbzeug und Matrixharz in daraus gefertigten Faserverbundbauteilen erreicht werden.

Als zähigkeitssteigernder Werkstoff können die üblichen, auch bei vorimpägnierten Faserhalbzeugen verwendeten zähigkeitssteigernden Werkstoffe eingesetzt werden. Beispielsweise können Blockpolymere wie etwa poly(Styren.b.Butadien-b-Methylmethacrylat) (SBM) oder poly(Methylmethacrylat-b-Butylacrylat-b-Methylmethacrylat) (MAM). Bevorzugt werden als zähigkeitssteigernder Werkstoff Polyorganosiloxane oder ein Gemisch aus Polyorganosiloxanen verwendet. Es hat sich herausgestellt, dass Polyorganosiloxane eine besonders gute zähigkeitssteigernde Wirkung bei Faserverbundbauteilen erzielen, die ausgehend von den hier beschriebenen textilen Halbzeugen hergestellt werden.

Besonders bevorzugt wird ein zähigkeitssteigernder Werkstoff verwendet, der Körner mit einem Polyorganosiloxankern aufweist, der von einer Schale umgeben ist. Polyorganosiloxane mit einer derartigen Struktur, auch Core-Shell-Struktur genannte, sind kommerziell erhältlich und weisen den Vorteil auf, bereits als Pulver mit Partikelgrößen im Mikrometer- bis Submillimeterbereich, insbesondere Größen im Bereich von 5 µm bis 200 µm vorzuliegen. Bei den Partikeln kann es sich um einzelne Körner wie auch um Agglomerate mehrere Körner handeln. Vorteilhafterweise werden beispielsweise Körner mit einer Schale aus Polymethylmethacrylat verwendet. Diese führen insbesondere in Verbindung mit einem Binder auf Epoxidbasis zu gut handhabbaren textilen Halbzeugen, die sich zu besonders zähen Faserverbundbauteilen weiterverarbeiten lassen. Auch Körner mit einer Schale, beispielsweise auf der Basis eines anderen Polymers oder auf der Basis eines Siloxans können vorteilhaft eingesetzt werden.

Bevorzugt wird die Mischung aus zähigkeitssteigerndem Werkstoff und Binder nach dem Aufbringen fixiert. Insbesondere beim Auftrag in Pulverform wird dadurch eine Abrieseln verhindert.

Das Fixieren der Mischung aus zähigkeitssteigerndem Werkstoff und Binder kann auf beliebige Art wie thermisch, mechanisch, chemisch, durch UV-Bestrahlung usw. und deren Kombinationen durchgeführt werden. Bevorzugt werden thermische, mechanische oder thermisch-mechanische Verfahren, beispielsweise auf der Grundlage von Heizen und/oder Walzen oder vergleichbaren Tätigkeiten. Besonders bevorzugt wird die Mischung aus zähigkeitssteigerndem Werkstoff und Binder durch Infrarotbestrahlung auf dem Textil thermisch fixiert. Einrichtungen zur Infrarotbestrahlung sind bei Produktionsanlagen zur Herstellung von textilen Halbzeugen meist bereits vorhanden. Indem man diese Einrichtungen für das thermische Fixieren nutzt, lässt sich das textile Halbzeug in möglichst wenigen Schritten und besonders kostengünstig herstellen.

Vorteilhafterweise wird die Mischung aus zähigkeitssteigerndem Werkstoff und Binder mit einer Auftragsmenge im Bereich von 5 g/m² bis 30 g/m² aufgebracht. Dies erlaubt eine gute thermische Fixierung bei nicht zu hoher bzw. langer Wärmebeaufschlagung und führt zu einer guten Zähigkeitssteigerung. Bevorzugt wird beim Auftragen mit Relativgeschwindigkeiten zwischen auszurüstendem Textil und Streuaggregat im Bereich von etwa 0,5 m/min bis etwa 10 m/min gearbeitet wird.

Ferner wird die Aufgabe durch ein textiles Halbzeug in der Form von einzelnen, ein Gelege bildenden Lagen, Gelegen, Geweben, Gewirken, Gestricken, Matten oder Geflechten oder einer Kombination davon gelöst, das Partikel eines Pulvergemischs aus einem zähigkeitssteigernden Werkstoff in Pulverform und einem Binder in Pulverform aufweist, wobei das Pulvergemisch eine Partikelgröße im Bereich von 0,5 µm bis 500 µm, bevorzugt von 5 µm bis 200 µm, aufweist.

In besonders bevorzugten Ausführungsformen weist das textile Halbzeug als zähigkeitssteigernden Werkstoff Polyorganosiloxanpartikel einer Größe im Bereich von 0,5 µm bis 500 µm, bevorzugt im Bereich von 1 µm bis 350 µm, besonders bevorzugt im Bereich von 5 µm bis 200 µm auf, die dem textilen Halbzeug eine besonders gute Zähigkeit verleihen.

Ein Faserverbundbauteil kann aus einem derartigen textilen Halbzeug in der Form von einzelnen, ein Gelege bildenden Lagen, Gelegen, Geweben, Gewirken, Gestricken, Matten oder Geflechten oder einer Kombination davon bestehen.

Das Faserverbundbauteil kann aus dem genannten textilen Halbzeug mittels üblicher Verfahren wie beispielsweise Harzinjektionsverfahren (RTM), Harzinfusion (RIM) oder vakuum-unterstützten Verfahren (VAP) hergestellt werden.

Sowohl beim textilen Halbzeug als auch bei dem Faserverbundwerkstoff werden die einzelnen, ein Gelege bildenden Lagen, Gelege, Gewebe, Gewirke, Gestricke, Matten oder Geflechte oder Kombinationen davon, im Folgenden zusammenfassend Textil genannt. Die ein Gelege bildenden Lagen werden auch Ply genannt und bilden insbesondere unidirektionale oder biaxiale oder multiaxiale Gelege.

Ein Ausführungsbeispiel der Erfindung wird nachfolgend anhand der Zeichnung erläutert. Die Zeichnung zeigt dabei in
- Figur 1: ein mit dem zähigkeitssteigernden Werkstoff ausgerüstetes Gewebe;
- Figur 2: einen Schnitt durch ein aus dem in Figur 1 dargestellten Gewebe hergestellten Faserverbundbauteil;
- Figur 3: ein mit dem zähigkeitssteigernden Werkstoff ausgerüstetes Gelege;
- Figur 4: einen schematischen Ablauf einer Ausführungsform des Herstellungsverfahrens; und
- Figur 5: einen Graph der Delaminationsfläche in Abhängigkeit von der Stoßenergie für herkömmliche Faserverbundbauteile und Faserverbundbauteile mit zähigkeitssteigerndem Werkstoff.

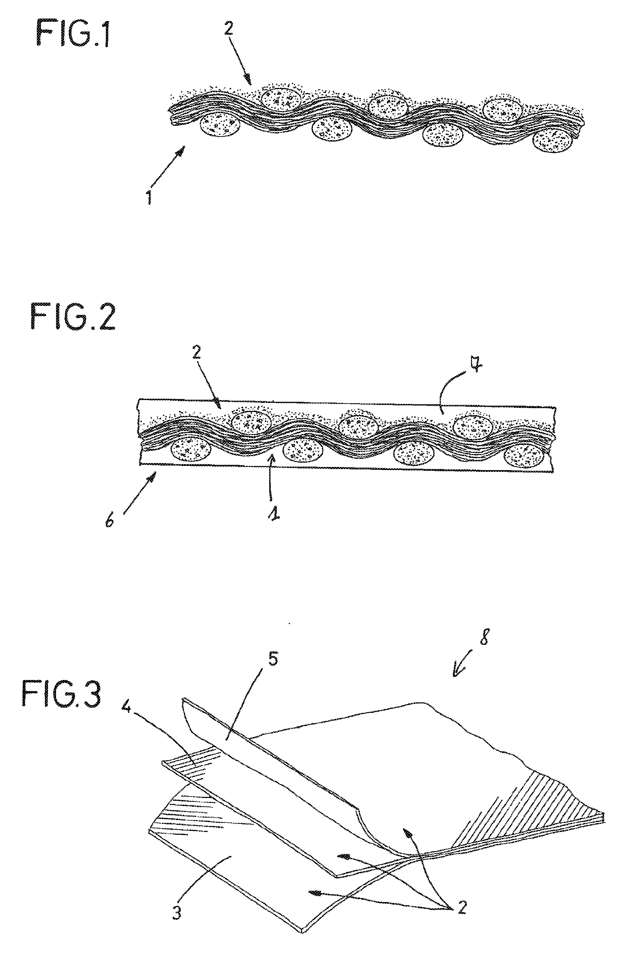

In Fig. 1 ist mit 1 ein an sich bekanntes Gewebe bezeichnet, das an seiner Oberseite mit einer Schicht 2 eines zähigkeitssteigernden Werkstoffes ausgerüstet ist. Der zähigkeitssteigernde Werkstoff ist im in Figur 1 dargestellten Beispiel als Pulver aufgebracht und anschließend thermisch fixiert worden, wobei der zähigkeitssteigernde Werkstoff zuvor mit einem ebenfalls pulverförmig vorliegenden Binder mechanisch gemischt wurde. In diesem Pulvergemisch und auf dem ausgerüsteten Gewebe 1 liegt der zähigkeitssteigernde Werkstoff in Form von Partikeln einer Größe im Bereich von 5 µm bis 200 µm vor. Der Binder in Schicht 2 trägt zur thermischen Fixierung des zähigkeitssteigernden Werkstoffs auf der Oberfläche des Gewebes 1 bei und ist derart gewählt, dass er sich bei der Weiterverabeitung des ausgerüsteten Gewebes 1 zu einem Faserverbundbauteils gut im dabei verwendeten Matrixharz löst, um einen guten Verbund zwischen Matrixharz und Fasergewebe zu erlauben.

Ein Faserverbundbauteil 6, das im vorliegenden Beispiel mittels eines Harzinjektionsverfahrens ausgehend von dem in Bezug auf Figur 1 erläuterten Gewebe 1 hergestellt wurde, ist in Figur 2 dargestellt. In vorliegenden Beispiel wurde das Gewebe 1 mit der Schicht 2 des zähigkeitssteigernden Werkstoffs in eine Form gelegt, die anschließend in einem Harzinjektionsverfahren mit Matrixharz 7 ausgefüllt wurde. Die Partikel des zähigkeitssteigernden Werkstoffs in der Schicht 2 bleiben dabei in ihrer Größe im wesentlichen erhalten.

Bei der Anordnung gemäß Fig. 3 ist ein multiaxiales Gelege 8 aus drei Gelegelagen bzw. Plies 3, 4 und 5 dargestellt, wobei beispielsweise die Gelegelage 3 aus -45 deg.-Fäden, die Gelegelage 4 aus 0 deg.-Fäden und die Gelegelage 5 aus +45 deg.-Fäden gebildet wird. Um ein Verrutschen der Gelegelagen 3, 4, 5 gegeneinander zu verhindern, können sie vernäht sein. Auf die Oberseite dieser Gelegelagen wird, wie die Pfeildarstellung verdeutlicht, der zähigkeitssteigernde Werkstoff 2 in Pulverform mit von Partikeln einer Größe im Bereich von 40 µm bis 200 µm aufgebracht.

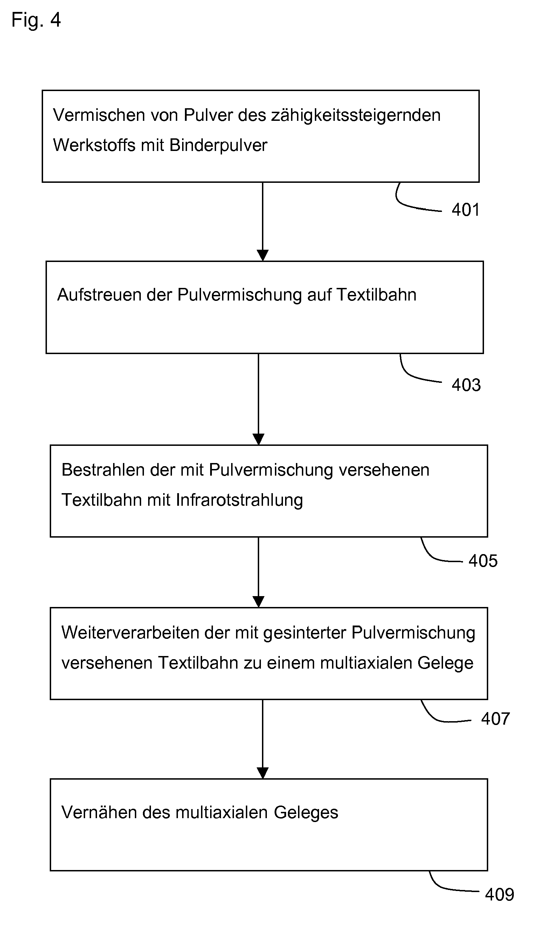

Im Folgenden soll anhand von Figur 4 und eines detaillierteren Beispiels die Herstellung des textilen Halbzeuges näher erläutert werden.

Zunächst wird das aufzutragende Pulver vorbereitet. Dies kann durch trockenes Vermischen eines Epoxid-Festharzes mit einem Epoxidäquivalent im Bereich von etwa 850 g/Äquivalent bis etwa 1000 g/Äquivalent, beispielsweise Epikote Resin 05311 der Firma Hexion Specialty Chemicals, als Binder mit einem Polyorganosiloxanpulver mit Core-Shell-Struktur, Genioperl P 52 der Firma Wacker Chemie AG, als zähigkeitssteigerndem Werkstoff geschehen (siehe auch Schritt 401 in Figur 4). Bei dem zähigkeitssteigernden Werkstoff Genioperl P 52 handelt es sich um pulverförmige Polyorganosiloxane mit einer Core-Shell-Struktur, bei denen die Polyorganosiloxane die Kerne der Pulverkörner bilden, welche eine Schale aus Polymethylmethacrylat aufweisen. Zum überwiegenden Teil bilden die Körner Agglomerate, deren durchschnittliche Größe im Bereich von etwa 40 µm bis etwa 100 µm liegt.

In einer Abwandlung des hier dargestellten Beispiels kann auch ein anderer geeigneter Binder verwendet werden. Ebenso kann auch ein Polyorganosiloxanpulver mit Core-Shell-Struktur mit anderem Schalenmaterial, z.B. auf der Basis von Kieselsäure, oder ohne Core-Shell-Struktur verwendet werden.

Im vorliegenden Beispiel werden beide Pulver im Gewichtsverhältnis 65 (zähigkeitssteigernder Werkstoff) zu 35 (Binder) intensiv mechanisch vermischt mithilfe von üblichen Vorrichtungen wie Kugelmühlen, Trockenmischern, Schleudermischer o. ä., so dass beide Materialien möglichst homogen miteinander vermischt sind. Dabei werden jedoch bestehende Agglomerate des zähigkeitssteigerndem Werkstoff, beispielsweise P52, nicht notwendigerweise auf Körnergröße zerkleinert und auch das Epoxidharz als Binder behält weitestgehend die Korngrößenverteilung, die durch den Hersteller zur Verfügung gestellt wird und beispielsweise bei Epikote Resin 05311 für zwei Drittel der Körner im Bereich von ca. 60 µm bis ca. 150 µm liegt.

Das Pulvergemisch kann anschließend mittels Standard-Pulverstreuaggregaten auf das Textil aufgebracht werden (siehe auch Schritt 403). Die Laufgeschwindigkeit des Textils war auf ca. 1 m/min eingestellt und die Auftragsmenge betrug ca. 15 g/m². In Laufrichtung des Textils hinter dem Streuaggregat war ein standardmäßiges Infrarot-Heizfeld angeordnet, unter dem Temperaturen im Bereich von etwa 120°C bis etwa 140°C erreicht wurden. Das Textil hatte auch unter dem Infrarot-Heizfeld eine Laufgeschwindigkeit von ca. 1 m/min. Durch die Wärmebestrahlung (siehe auch Schritt 405) wurde die auf dem Textil befindliche Pulvermischung aus zähigkeitssteigerndem Werkstoff und Binder in dem Sinne gesintert, dass die Agglomerate und ggf. Körner aus zähigkeitssteigerndem Werkstoff sich mit dem Binderkörnern und/oder -agglomeraten zumindest zum Teil verbinden und die Pulverkörner bzw. -agglomerate sich auch zumindest teilweise mit der Textiloberfläche verbinden.

Im vorliegenden Beispiel handelt es sich bei dem beschichteten Textil um beschichtete Lagen oder Plies, die im darauf folgenden Verarbeitungsschritt zu einem multiaxialen Gelege weiterverarbeitet (Schritt 407) und vernäht (Schritt 409) und/oder thermofixiert, so dass sich der zähigkeitssteigernde Werkstoff in allen Zwischenlagen und auf der Oberfläche des textilen Halbzeuges befindet. Dies führt bei Stoßeinwirkung zu einem besonders effizienten Schutz vor Delamination einzelner Lagen innerhalb des Faserverbundbauteils, das ausgehend von dem textilen Halbzeug als Verstärkungsmaterial mittels üblicher Verfahren wie etwa Harzinjektionsverfahren (RTM), Harzinfusion (RIM) oder vakuum-unterstützten Verfahren (VAP) produziert wurden.

Vergleichbare textile Halbzeuge und Faserverbundbauteile können beispielsweise auch auf der Grundlage von Geweben, Gewirken, Gestricke, Matten, Geflechten oder unidirektionalen, biaxialen oder multiaxialen oder sonstigen Gelegen oder Kombinationen davon hergestellt werden, wobei alle oder auch nur einzelne Gewebe, Gewirke, Gestricke, Matten, Geflechte, Gelege oder Lagen mit einem zähigkeitssteigernden Wirkstoff mit Partikelgrößen im Bereich von 0,5 µm bis 500 µm, bevorzugt im Bereich von 1 µm bis 350 µm, besonders bevorzugt von 5 µm bis 200 µm beaufschlagt sein kann.

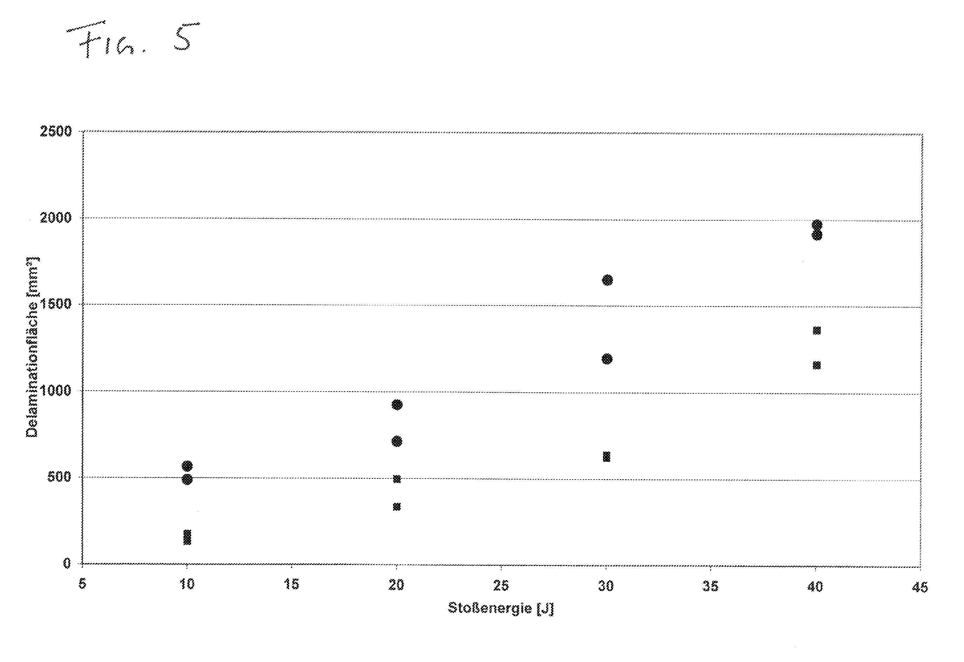

Anhand von Faserverbundbauteilen, die ausgehend von den beschriebenen textilen Halbzeugen in einem Harzinjektionsverfahren mit dem Epoxidharz EPS 600 der Firma Hexion Speciality Chemicals als Matrixharz hergestellt wurden, wurde die Zähigkeit über Delaminationstests gemessen. Dazu wurde eine Kugel aus unterschiedlichen Fallhöhen auf die Oberfläche der Faserverbundbauteile fallengelassen, um unterschiedliche Stoßenergien zu erreichen, und die dabei erzeugte Delaminationsfläche gemessen. Die Fallhöhe der Kugel wurde so eingestellt, dass Stoßenergien beim Aufprall auf der Oberfläche des jeweiligen Faserverbundbauteils von 10 J, 20 J, 30 J und 40 J erreicht wurden. Die dadurch erzeugte Delaminationsfläche wurde für die Faserverbundbauteile mit zahigkeitssteigerndem Werkstoff mit Partikelgrößen im Mikrometer- bis Submillimeterbereich wurde in Figur 5 mit Quadraten aufgetragen, die Delaminationsfläche von Referenz-Faserverbundbauteile ohne zähigkeitssteigerndem Werkstoff wurde mit Kreisen aufgetragen. Die Messungen haben ergeben, dass bei allen Stoßenergien die Delaminationsfläche bei den Faserverbundbauteilen mit zahigkeitssteigerndem Werkstoff mit Partikelgrößen in Mikrometer- bis Submillimeterbereich deutlich unter der Delaminationsfläche bei den Referenz-Faserverbundbauteilen lagen, insbesondere bei den niedrigeren Stoßenergien im Bereich von 10 J bis 30 J sogar nur halb so groß war.

Vergleichbare Ergebnisse wurden auch bei Faserverbundbauteilen erreicht, die ausgehend von den beschriebenen textilen Halbzeugen in einem Harzinjektionsverfahren mit dem Harzsystem RTM 6 der Firma Hexcel Composites als Matrixharz hergestellt wurden, das wie das Matrixharz EPS 600 bevorzugt bei der Herstellung von Faserverbundbauteilen für die Luftfahrtindustrie eingesetzt wird.

### Bezugszeichen

- 1: Gewebe
- 2: Schicht mit zähigkeitssteigerndem Werkstoff
- 3: Gelegelage
- 4: Gelegelage
- 5: Gelegelage
- 6: Faserverbundbauteil
- 7: Matrixharz
- 8: multiaxiales Gelege

- 401-409: Verfahrensschritte

## Patentansprüche

1. Verfahren zur Herstellung eines textilen Halbzeugs, beinhaltend einen zähigkeitssteigernden Werkstoff zur Herstellung eines Faserverbundbauteils, mit den Schritten:
- Mischen des zähigkeitssteigernden Werkstoffs (2) in Pulverform mit einem Binder in Pulverform, wobei das Pulvergemisch eine Partikelgröße im Bereich von 0,5 µm bis 500 µm aufweist,
- Aufbringen des Pulvergemischs auf die Außenseite von einzelnen, ein Gelege bildenden Lagen, Gelegen, Geweben, Gewirken, Gestricken, Matten oder Geflechten oder einer Kombination davon.

2. Verfahren nach Anspruch 1, **dadurch gekennzeichnet, dass** ein thermoplastischer Binder verwendet wird.

3. Verfahren nach Anspruch 1 oder 2, **dadurch gekennzeichnet, dass** ein Epoxidharz als Binder verwendet wird.

4. Verfahren nach einem der Ansprüche 1 bis 3, **dadurch gekennzeichnet, dass** zähigkeitssteigernder Werkstoff (2) und Binder in einem Mischungsverhältnis in Gewichtsprozent von Binder zu zähigkeitssteigerndem Werkstoff (2) im Bereich von 50:50 bis 30:70 gemischt werden.

5. Verfahren nach einem der Ansprüche 1 bis 4, **dadurch gekennzeichnet, dass** als zähigkeitssteigernder Werkstoff (2) Polyorganosiloxane oder ein Gemisch aus Polyorganosiloxanen verwendet wird.

6. Verfahren nach einem der Ansprüche 1 bis 5, **dadurch gekennzeichnet, dass** ein zähigkeitssteigernder Werkstoff (2) verwendet wird, der Körner mit einem Polyorganosiloxankern aufweist, der von einer Schale umgeben ist.

7. Verfahren nach einem der Ansprüche 1 bis 6, **dadurch gekennzeichnet, dass** die Mischung aus zähigkeitssteigerndem Werkstoff (2) und Binder nach dem Aufbringen fixiert wird.

8. Verfahren nach Anspruch 7, **dadurch gekennzeichnet, dass** die Mischung aus zähigkeitssteigerndem Werkstoff (2) und Binder thermisch und/oder mechanisch fixiert wird.

9. Verfahren nach einem der Ansprüche 1 bis 8, **dadurch gekennzeichnet, dass** die Mischung aus zähigkeitssteigerndem Werkstoff (2) und Binder mit einer Auftragsmenge im Bereich von 5 g/m² bis 30 g/m² aufgebracht wird.

10. Textiles Halbzeug in der Form von einzelnen, ein Gelege bildenden Lagen, Gelegen, Geweben, Gewirken, Gestricken, Matten oder Geflechten oder einer Kombination davon, **dadurch gekennzeichnet, dass** es Partikel eines Pulvergemischs aus einem zähigkeitssteigernden Werkstoff (2) in Pulverform und einem Binder in Pulverform aufweist, wobei das Pulvergemisch eine Partikelgröße im Bereich von 0,5 µm bis 500 µm aufweist.

11. Textiles Halbzeug nach Anspruch 10, **dadurch gekennzeichnet, dass** es als zähigkeitssteigernden Werkstoff (2) Polyorganosiloxanpartikel einer Größe im Bereich von 0,5 µm bis 500 µm aufweist.

## Claims

1. A method for producing a textile semi-finished product, comprising a toughness-enhancing material for the manufacture of a composite fiber component, comprising the steps of:
- mixing the toughness-enhancing material (2) in powder form with a binder in powder form, wherein the powder mixture has a particle size in the range of 0.5 µm to 500 µm,
- applying the powder mixture on an outer surface of individual layers forming a multi-ply fabric, multi-ply fabrics, woven textiles, knitted fabrics, matted fabrics or braided fabrics, or any combination thereof.

2. The method according to claim 1, **characterized in that** a thermoplastic binder is used.

3. The method according to claim 1 or 2, **characterized in that** an epoxy resin is used as the binder.

4. The method according to any one of claims 1 to 3, **characterized in that** the toughness-enhancing material (2) and the binder are mixed at a mixing ratio in weight percent of the binder to the toughness-enhancing material (2) in the range of 50:50 to 30:70.

5. The method according to any one of claims 1 to 4, **characterized in that** polyorganosiloxanes or a mixture of polyorganosiloxanes is used as the toughness-enhancing material (2).

6. The method according to any one of claims 1 to 5, **characterized in that** a toughness-enhancing material (2) is used having grains with a polyorganosiloxane core surrounded by a shell.

7. The method according to any one of claims 1 to 6, **characterized in that** the mixture of toughness-enhancing material (2) and binder is fixed after application.

8. The method according to claim 7, **characterized in that** the mixture of toughness-enhancing material (2) and binder is thermally and/or mechanically fixed.

9. The method according to any one of claims 1 to 8, **characterized in that** the mixture of toughness-enhancing material (2) and binder is applied using an application amount in the range of 5 g/m² to 30 g/m².

10. A textile semi-finished product in the form of individual layers forming a multi-ply fabric, multi-ply fabrics, woven textiles, knitted fabrics, matted fabrics or braided fabrics, or any combination thereof, **characterized in that** it comprises particles of a powder mixture of a toughness-enhancing material (2) in powder form and a binder in powder form, wherein the powder mixture has a particle size in the range of 0.5 µm to 500 µm.

11. The textile semi-finished product according to claim 10, **characterized in that** it includes polyorganosiloxane particles having a size in the range of 0.5 µm to 500 µm as the toughness-enhancing material (2).

## Revendications

1. Procédé de fabrication d'un produit textile semi-fini, comprenant un matériau augmentant la ténacité pour la fabrication d'un composant de matériau composite renforcé de fibres, consistant à réaliser les étapes suivantes:
- mélanger le matériau augmentant la ténacité (2) sous forme de poudre avec un liant sous forme de poudre, le mélange de poudres présentant des particules d'une taille entre 0,5 µm et 500 µm,
- appliquer le mélange de poudres sur la face extérieure de couches individuelles formant un textile non-tissé, de textiles non-tissés, de textiles tissés, de textiles à mailles, de textiles tricotés, de nattes ou de textiles tressés ou d'une combinaison de ceux-ci.

2. Procédé selon la revendication 1, **caractérisé en ce qu'**un liant thermoplastique est utilisé.

3. Procédé selon les revendications 1 ou 2, **caractérisé en ce qu'**une résine epoxy est utilisée comme liant.

4. Procédé selon l'une des revendications 1 à 3, **caractérisé en ce qu'**un matériau augmentant la ténacité (2) et un liant sont mélangés dans un rapport de mélange de liant à matériau augmentant la ténacité (2) compris entre 50:50 et 30:70 de fraction massique.

5. Procédé selon l'une des revendications 1 à 4, **caractérisé en ce que** des polyorganosiloxanes ou un mélange de polyorganosiloxanes sont utilisés comme matériau augmentant la ténacité (2).

6. Procédé selon l'une des revendications 1 à 5, **caractérisé en ce qu'**est utilisé un matériau augmentant la ténacité (2) qui présente des grains avec un noyau de polyorganosiloxanes enrobé d'une enveloppe.

7. Procédé selon l'une des revendications 1 à 6, **caractérisé en ce que** le mélange d'un matériau augmentant la ténacité (2) et d'un liant n'est fixé qu'après application.

8. Procédé selon la revendication 7, **caractérisé en ce que** le mélange d'un matériau augmentant la ténacité (2) et d'un liant est fixé de façon thermique et/ou mécaniquement.

9. Procédé selon l'une des revendications 1 à 8, **caractérisé en ce que** le mélange d'un matériau augmentant la ténacité (2) et d'un liant est appliqué avec une quantité d'application comprise entre 5 g/m² et 30 g/m².

10. Produit textile semi-fini sous forme de couches individuelles formant un textile non-tissé, de textiles non-tissés, de textiles tissés, de textiles à mailles, de textiles tricotés, de nattes ou de textiles tressés ou d'une combinaison de ceux-ci, **caractérisé par** ce que le produit textile semi-fini présente des particules d'un mélange de poudres d'un matériau augmentant la ténacité (2) sous forme de poudre et d'un liant sous forme de poudre, le mélange de poudres présentant une dimension particulaire comprise entre 0,5 µm et 500µm.

11. Produit textile semi-fini selon la revendication 10, **caractérisé en ce qu'**il présente comme matériau augmentant la ténacité (2) des particules de polyorganosiloxane d'une taille comprise entre 0,5 µm et 500 µm.
